# EUROPEAN PATENT SPECIFICATION

(11) **EP 1 038 074 B1**
(45) Date of publication and mention of the grant of the patent: **14.07.2004**
(21) Application number: 98955629.5
(22) Date of filing: 25.11.1998
(51) Int. Cl.: E04C 2/24, E04C 2/26

(54) **METHOD FOR PRODUCING A PREFABRICATED MEMBER AND A PREFABRICATED MEMBER**
VERFAHREN ZUR HERSTELLUNG EINES FERTIGTEILS UND FERTIGTEIL
PROCEDE DE FABRICATION D'UN ELEMENT PREFABRIQUE ET ELEMENT PREFABRIQUE CORRESPONDANT

(30) Priority: 26.11.1997 FI 974332
(43) Date of publication of application: 27.09.2000
(73) Proprietor: WIMACOR OY, 50600 Mikkeli (FI)
(72) Inventor: WILEN, Hannu, FIN-50600 Mikkeli (FI)
(74) Representative: Tanhua, Pekka Vilhelm
(86) International application number: PCT/FI1998/000923
(87) International publication number: WO 1999/027209

(56) References cited:
- FI-B- 94 277
- FR-A- 1 301 300
- US-A- 2 700 632
- US-A- 4 372 799

## Description

The invention relates to a prefabricated member as defined in the preamble of claim 1.

The invention also relates to a method for producing a prefabricated member as defined in the preamble of claim 6.

A prefabricated member is previously known, which comprises a frame and a supporting battening, a core plate such as an insulating plate fitted into these, and surface plates attached, preferably by glueing, to both sides of this. Such a prefabricated member is manufactured e.g. by applying glue to the first surface plate, by placing the frame and the supporting battening first and subsequently the core plate against the glued surface of the surface plate, and a second surface plate, to which glue has been applied as well, is in turn fitted on the frame, the supporting battening and the core plate, with the glued surface facing the core plate. After this the surface plates, the frame, the supporting battening and the core plate are compressed by means of an appropriate press, the glue films between the plates being then also dried, thus providing a tight prefabricated member.

The production method described above has the drawback of poor adherence between the parts of the prefabricated member. This is due to the large number of air bubbles and air pockets in the adhesive layer between the core plate and the surface plates, because air cannot escape from between the plates during compression.

The production method described also has the drawback of emitting harmful glue vapours to the environment.

In addition, the application of the method is restricted by the fact that it is difficult to manufacture tridimensional bodies by means of the method, because the compression direction is merely unidirectional.

FI patent specification 66963 describes a prefabricated member, in which the core plate fitted in a framing and supporting structure is made of an air-permeable material, such as foam plastic, and an adhesive material which cures rapidly under the effect of moisture is used for fastening the surface plates and the core plates to one another. The prefabricated member is manufactured by absorbing air from the core plate, thus generating a vacuum in the core plate, so that the ambient atmospheric pressure presses the surface plates tightly to the framing and supporting structure and to the core plate. Nevertheless, this method does not enable prefabricated members to be manufactured from a hermetic and/or solid core plate.

FI patent specification 94277 describes a method for manufacturing a prefabricated member. The prefabricated member comprises surface plates, a hermetic edge material and/or a mounting frame and a stationary intermediate material plate. The components of the prefabricated member are bonded by means of a vacuum. The stationary intermediate material plate is a plate with fluted surfaces. A suction opening communicating with the grooves has been provided in the mounting frame. The vacuum is generated through the suction opening and the grooves between the intermediate material plate and the surface plates, and the air bubbles and pockets are simultaneously removed from the glued surfaces. The ambient atmospheric pressure presses the surface plates into contact with the mounting frame and the intermediate material plate.

The method for manufacturing a prefabricated member described above involves the problem of a great number of working steps. Accordingly, the prefabricated member will have the drawback of the large number of components required, especially the mounting frame or a similar component. The production method is also limited by the fact that the mounting frame sets limitations on the shape of the prefabricated member. In principle, it enables the manufacture of rectangular planear members alone.

The object of the invention is to provide a new prefabricated member which has a more flexible and versatile shape than previously known prefabricated members have. Another object of this invention is to provide a new method for manufacturing a prefabricated member which allows the problems of conventional methods to be overcome and their restrictions to be eliminated.

The prefabricated member of the invention comprises at least two plates, the first, i.e. core plate, and the second, i.e. surface plate, which are bonded by their joint surfaces equipped with a glue film, the first plate being provided at its joint surface with at least one array of interconnected grooves forming a fluted area, and the first plate comprising at least in the step of manufacturing the prefabricated member an opening for a vacuum, which opening communicates at one end with the grooves and at the other end with the outside of the plate.

In accordance with the characteristics of the product invention, a seal having bond surfaces is provided around the fluted area formed by the grooves between the joint surfaces of the plates, the seal being provided for prefixing the joint surfaces of the plates to one another in order to provide an at least partly hermetic barrier around the fluted area at the stage of manufacturing the prefabricated member

The prefabricated member of the invention has the advantage of a simpler structure compared with conventional prefabricated members.

The prefabricated member of the invention has the further advantage of the surface plate or plates being tightly and firmly attached to the core plate. The prefabricated plate of the invention can be applied to the manufacture of various prefabricated member structures of different materials, such as for instance the manufacture of light wall and roof panels of buildings and the load-carrying members of commercial vehicle bodies.

In the method for producing prefabricated members comprising at least two plates, the first plate, i.e. core plate and the second plate, i.e. surface plate, the plates being bonded by their joint surfaces, the first plate being equipped on its joint surface with at least one set of interconnected grooves forming a fluted area, the first plate comprising, at least at the stage of manufacturing the prefabricated member, an opening, which communicates at one end with the grooves and at the other end with the outside of the plate, whereby
- a glue film is provided at least on one of the joint surfaces of the plates,
- the plates are placed with their joint surfaces facing each other, after which
- a vacuum is created in the grooves through the opening and between the plates, the ambient atmospheric pressure pressing the joint surfaces against each other, the plates being bonded owing to the glue film, after which
- the vacuum is released and the prefabricated member is finished.

In accordance with the characteristics of the method invention a seal provided with bond surfaces is disposed around the fluted area formed by the grooves between the joint surfaces of the plates, the seal serving to prefix the joint surfaces of the plates to one another in order to provide an at least partly hermetic barrier of the joint surfaces around the fluted area at the stage of creating and using the vacuum.

The method of the invention has the advantage of enabling prefabricated members to be manufactured in a simple and straightforward manner without complex working steps. The method of the invention allows prefabricated members of various shapes to be manufactured with low glue vapour emissions to the working space. The method also achieves good adherence between the components of the prefabricated member.

The invention is described in greater detail below with reference to the accompanying drawings, of which
- figure 1: is a top view of the prefabricated member of the invention in partial section,
- figure 2: shows a prefabricated member of figure 1 in cross-section A-A, and
- figure 3: shows a partial enlargement of the corresponding prefabricated member in cross-section B-B,
- figure 4: shows a second cross-section A-A of the prefabricated member of figure 1, and
- figure 5: shows a partial enlargement of the corresponding prefabricated member in cross-section B-B,
- figure 6: is a schematic view of the method of manufacturing the prefabricated member of the invention,
- figure 7a: shows a partial cross-section of a third prefabricated member of the invention parallel to the grooves of the core plate,
- figure 7b: shows a partial cross-section of a fourth prefabricated member of the invention parallel to the grooves of the core plate,
- figure 7c: shows a partical cross-section of a fifth prefabricated member of the invention parallel to the grooves of the core plate,
- figure 8: shows a cross-section of a sixth prefabricated member of the invention, and
- figure 9: is a schematic view of a second method for manufacturing the prefabricated member of the invention.

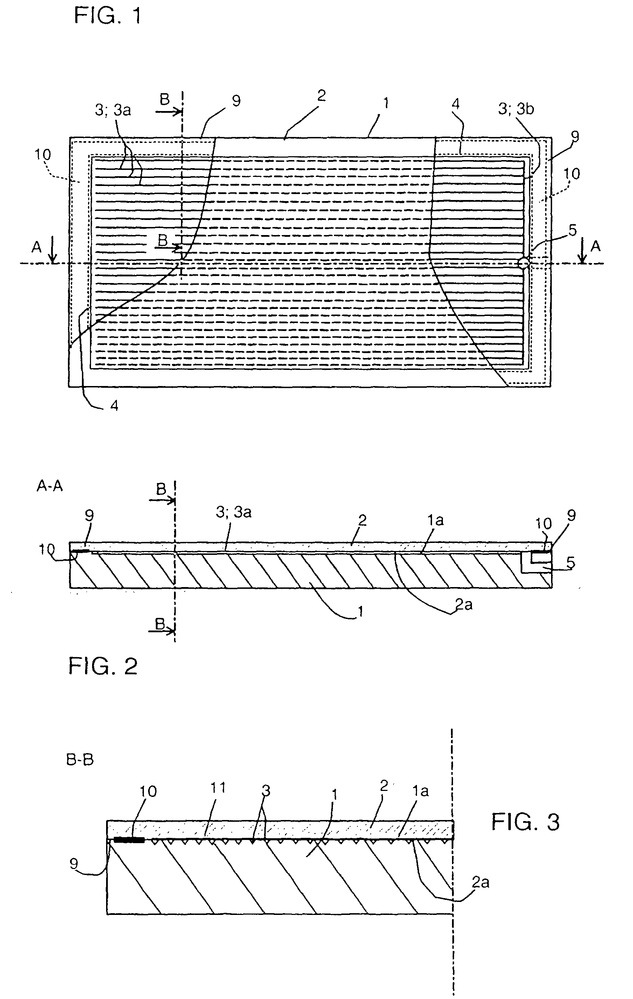

Figures 1, 2 and 3 illustrate a prefabricated member in accordance with the invention. This prefabricated member comprises two plates 1, 2, a first plate, i.e. core plate 1 and a second plate, i.e. surface or cladding panel 2. The plates 1, 2 have been bonded by their joint surfaces 1a, 2a. At its joint surface 1a, the core plate 1 is equipped with at least one array of interconnected grooves 3, disposed in the fluted area 4. The core plate 1 comprises an opening 5, which communicates at its first end with the grooves 3 and at its second end with the outside of the plate 1 When the prefabricated member has been assembled, the opening 5 is preferably filled with a suitable compound preferably corresponding to the material of the core plate 1.

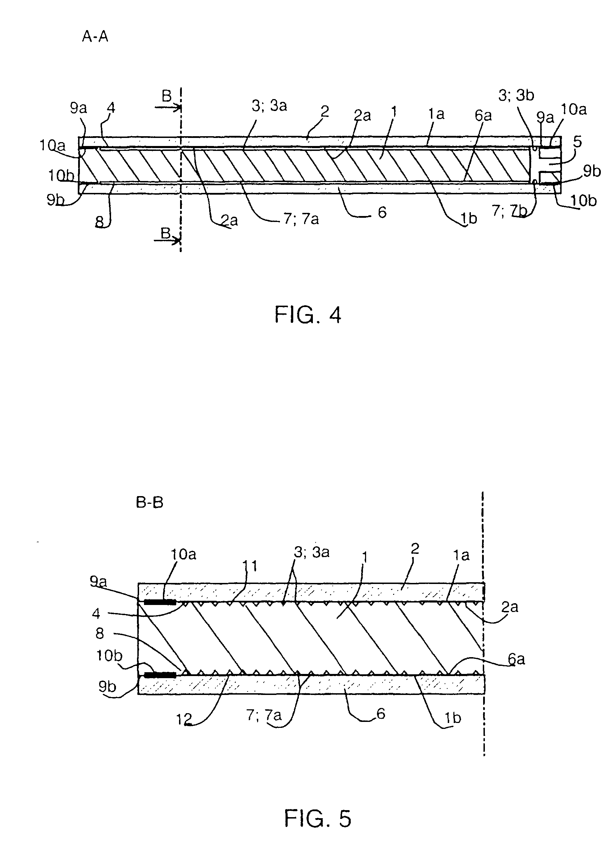

Figures 1, 4 and 5 illustrate a second prefabricated member in accordance with the invention. This prefabricated member comprises three plates 1, 2, 6; the first plate i.e. core plate 1 is in the centre of the prefabricated member and the second and third plate, i.e. surface or cladding panels 2,6 enclose the core plate 1 on both sides. The plates 1, 2, 6 are bonded by their joint surfaces 1a, 2a; 1b, 6a. At both its joint surfaces 1a, 1b, the core plate 1 is equipped with at least one array of interconnected grooves 3,7 disposed in the fluted area 4, 8. The core plate 1 comprises an opening 5, which at its first end communicates with the grooves 3, 7 in the joint surfaces 1a, 1b, and at its second end with the outside of the plate 1, and thus of the entire prefabricated member, e.g. through the end surface of the plate 1. When the prefabricated member is finished, the opening 5 is most advantageously filled in this embodiment as well.

The plates 1, 2; 6 of the prefabricated member are for instance as follows. The first one, i.e. the core plate 1 is a relatively thick, airproof and solid, but usually flexible plate, such as a cellular plastic board or a similar thermal insulation or acoustic board or similar made of plastic. The first plate is preferably mouldable, e.g. flexible into one or more directions. The second and third plate, i.e. the surface plates 2; 6 are usually a relatively thin and flexible sheet, such as a plastic or metal sheet, a plywood, veneer or wooden panel. The area of the surface plates 2; 6 of the prefabricated member is substantially equal to that of the core plate 1.

The first, i.e. core plate 1 of the prefabricated member consists preferably of one continuous plate 1 with grooves 3, 7 provided, for instance by machining, on one or both of its joint surfaces 1a, 1b. The grooves 3; 7 are provided in a specific area of the joint surface, i.e. the fluted area 4, 8. There are for instance 1 to 10 grooves 3; 7 per dm². The fluted area 4, 8 and the associated grooves 3; 7 extend to a distance of 5-200 mm, preferably 10-30 mm from the edges of the core plate 1. The grooves 3, 7 advantageously comprise parallel grooves 3a; 7a and a groove 3b; 7b transverse to these, by means of which the parallel grooves 3a: 7a are suitably connected to each other and further to the opening 5. The border area 9; 9a, 9b of the joint surface 1a, 1b of the core plate 1 is not fluted; it is preferably an area having a plane surface.

It should be noted that several fluted areas 4; 8 can be provided on the joint surface 1a, 1b of the core plate 1, each of which communicate with the outside of the plate through an individual opening 5. Each opening 5 is then separately, either simultaneously or successively, connected to a suitable vacuum source. Thus, the different zones of the prefabricated member can be assembled in separate, parallel or successive work steps, while the desired adherence of the different plates 1, 2; 6 to each other is ensured in the different zones. This is important especially in the case of prefabricated members which are not rectangular or are curved and/or bent.

A seal 10; 10a, 10b has been disposed between the joint surfaces 1a, 2a; 1b, 6a of the core plate I and the surface plate 2 or plates 2; 6, around the fluted area 4, 8, and in the border area 9; 9a, 9b in the embodiment examples of figures 1-5. This seal 10; 10a, 10b is equipped with bond surfaces, by means of which it is fixed to the joint surfaces 1a, 2a; 1b, 6a of the plates. Using the seal 10; 10a, 10b, the first plate 1 and the second plate 2, and the first plate 1 and the third plate 6, respectively, are prefixed to each other before the actual glueing step. The seal 10; 10a, 10b is preferably a thin sealing tape or glue film, or generally a similar film adhering to surfaces, by means of which an at least partly hermetic barrier is formed between the joint surfaces 1a, 2a; 1b, 6a of the plates 1, 2; 6. The seal 10; 10a, 10b used is for instance a double-faced tape, i.e. a tape having a glue film on the opposite surfaces, or a glue film which is directly applied. The seal 10; 10a, 10b, such as a sealing tape, has a width for instance in the range from 5 to 200 mm, preferably 10 to 30 mm. The seal 10; 10a, 10b is preferably such that the plates 1, 2, 6 are immediately bonded at the seal 10; 10a, 10b as they are fitted into position. The seal 10; 10a, 10b is fitted either directly around the fluted area 4, 8 or in the border area 9; 9a, 9b of the plates 1, 2; 6.

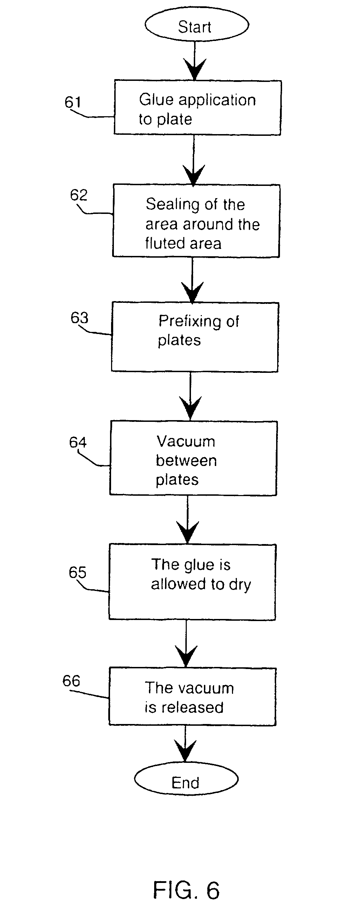

The prefabricated plate is manufactured as follows with the method in accordance with the invention. We refer to figures 1-3 and in particular to figure 6, which shows a block diagram of the process steps. In the first step 61, a glue film 11 is applied at least to one of the joint surfaces 1a, 2a of the first, i.e. core plate and the second plate 2, i.e. the surface plate in order to bond the plates 1, 2. In the second step 62, a seal 10 is placed in the border area of the joint surface 9 of the core plate 1, i.e. the fluted area 4 is simultaneously surrounded with the seal 10. After this, in the third step 63, the plates 1, 2 are fitted against each other with the joint surfaces 1a, 2a against each other, whereby the glue film 11 gets between the plates 1, 2. In this manner, the first plate 1 and the second plate 2 are prefixed to one another at least partly hermetically by means of the seal 10. In the fourth step 64, a suction pump or the like is connected to the opening 5 and is activated: a vacuum is created in the grooves 3 and between the plates 1, 2 through the opening 5 in the second plate. Thus, the ambient atmospheric pressure will be higher than the atmospheric pressure prevailing between the plates, the ambient atmospheric pressure pressing the plates 1, 2 at their joint surfaces 1a, 2a tightly together, pressing simultaneously the glue film 11 to the two joint surfaces 1a, 2a. Owing to the seal 10, the fluted area 4 is relatively hermetically insulated from the environment, whereby air is efficiently absorbed from between the plates 1, 2 without being immediately replaced with an equal amount of air, and a vacuum is generated. The vacuum is allowed to act and the glue film to dry in step 65. The operation of the suction pump is interrupted and the vacuum is eliminated in the following step 66 after a suitable period of time, when the glue film between the plates 1, 2 has dried. The glueing of the plates 1, 2 stiffens the prefabricated plate. The plates 1, 2 have been bonded and the prefabricated member is finished in principle. The prefabricated member is checked and trimmed, whereby the opening 5 is preferably filled with a suitable compound.

The prefabricated member of figures 1, 4 and 5 is also manufactured as described above in principle. A glue film 11, 12 is applied to the joint surfaces 2a, 6a of the surface plates, i.e. the second and third plate 2, 6, and the fluted areas 4, 8 are surrounded with the seal 10; 10a, 10b in the border areas 9; 9a, 9b. The glued surface plates 2, 6 are placed on either side of the core plate 1. Through the opening 5 m the core plate 1, a vacuum is led through the grooves 3; 3a, 3b; 7; 7a, 7b between the first and the second plate 1, 2 and the first and third plate 1, 6, respectively, the ambient atmospheric pressure pressing the surface plates 1, 6 into contact with the core plate 1. In this case as well, the ambient atmospheric pressure produces the pressing force required for the glueing. After the drying reaction of the glue film 11, 12 provided between the surface plates 2, 6 and the core plate 1, the vacuum is released through the opening 5. The glueing of the surface plates 2, 6 to the core plate 1 stiffens the prefabricated member. The prefabricated member is finished in principle. The prefabricated member is checked and trimmed, whereby the opening 5 is preferably filled with a suitable compound in this case as well.

The adhesive material used in the seal 10; 10a, 10b, such as a sealing tape, is preferably not the same as the one used in the actual glueing of the surface plates 1, 6 and the core plate 1, i.e. the glue film 11, 12. The main task of the seal 10; 10a, 10b is to seal the perimeter of the fluted area 4, 8; the seal in the border area is allowed to dry slower than the actual glue film 11, 12 between the plates 1, 2; 6.

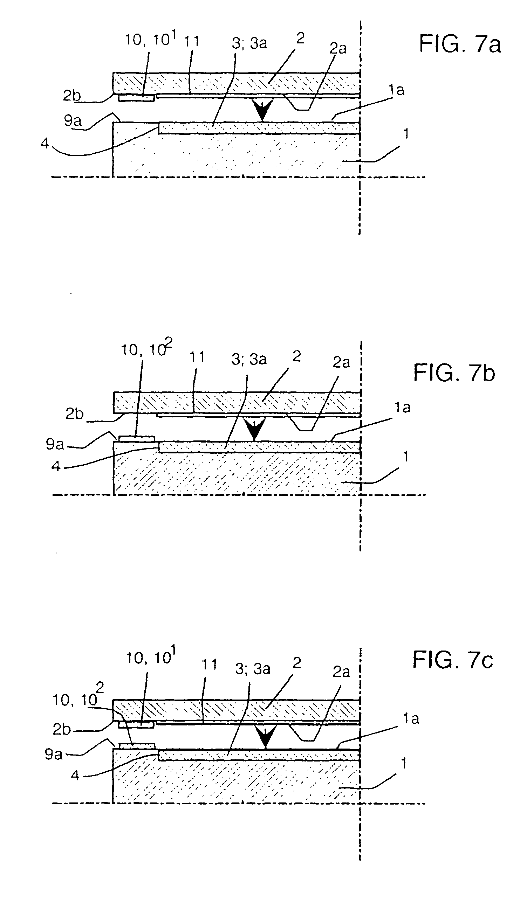

Figures 7a, 7b, 7c illustrate a plurality of prefabricated members of the invention partly in section and exploded. In these prefabricated members, the fluted area 4 formed by the grooves 3 in the core member 1 is surrounded with a seal 10; 10¹, 10², such as a sealing tape, in either of the plates 1, 2 to be bonded, or even in both of them. In figure 7a, a joint 10¹ has been mounted in the border area 2b of the joint surface 2a of the surface plate 2, the seal extending around the entire perimeter of the surface plate 2 in this case. The border area 9a of the joint surface 1a of the core plate 1 is free of the seal. In figure 7b, in turn, a seal 10² has been mounted in the border area 9a of the joint surface 1a of the core plate 1, whereas the border area 2b of the joint surface 2a of the surface plate 2 is free of the seal. In figure 7c, seals 10¹, 10² have been mounted both in the border area 2b of the joint surface 2a of the surface plate 2 and in the border area 9a of the joint surface 1a of the core plate 1, the seals being pressed against one another at least partly hermetically as the plates 1, 2 are disposed with the joint surfaces 1a, 2a facing each other as indicated by the arrow in the manufacture of the prefabricated member by the method of the invention.

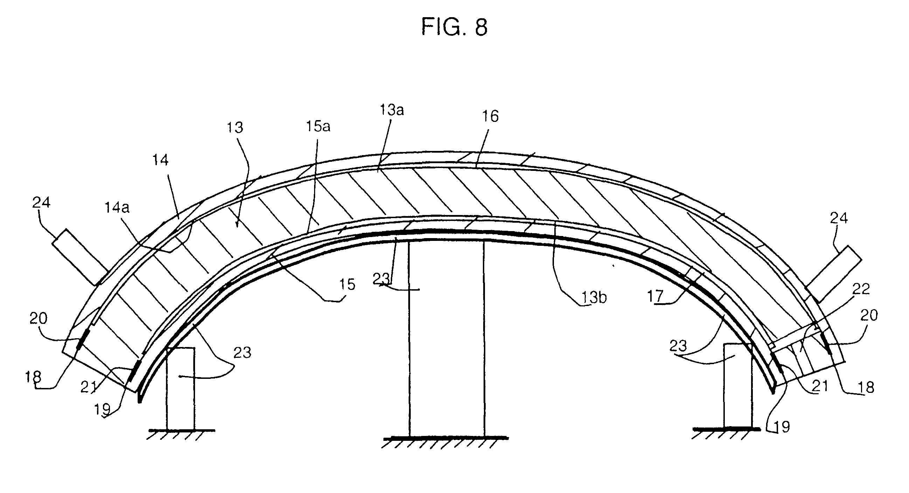

Figure 8 shows a cross-section of the prefabricated member of the invention pressed to shape. The prefabricated member comprises three plates: a first plate 13, i.e. the core plate, and two surface plates 14, 15 bonded by their joint surfaces 14a, 15a to the joint surfaces 13a, 13b of the core plate 13 on either side of this using a glue film of a suitable adhesive, as explained above. Grooves 16, 17 have been provided on the joint surfaces 13a, 13b of the core plate 13, for instance in a manner similar to that of the prefabricated member of figures 1, 4 and 5. A seal 20, 21 has been mounted in the border area 18, 19 of the joint surfaces 13a, 13b, 14a, 15a, around an area defined by the grooves 16, 17, the seal having been disposed to extend around the fluted area formed by the grooves 16, 17, and in this case around the plates 13, 14, 15. The seal 20, 21 consists for instance of an at least partly or even completely hermetic sealing tape or the like, as disclosed in connection with the embodiment examples above.

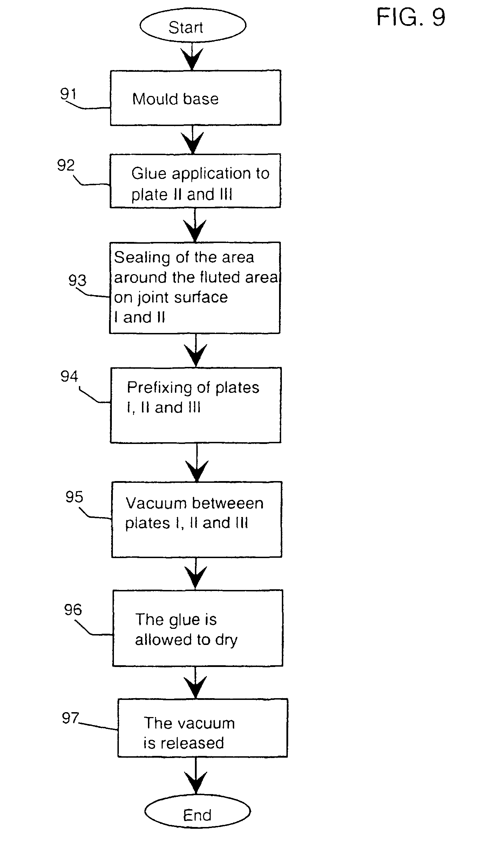

The method of the invention for producing a prefabricated member bent to shape, as the one illustrated in figure 8, is carried out as illustrated schematically in figure 9. In the first step 91, the mould base 23 is prepared for use, as shown schematically in figure 8. It is either built up especially for this purpose, or a previously made mould base is reused. In step 92, the glue film is applied to the joint surfaces 14a, 15a of the surface plates 14, 15. The joint surfaces 13a, 13b on different sides of the core plate 13 are equipped with a seal 20, 21 in their border areas 18, 19 in step 93. The plates 13, 14, 15 are prefixed m step 94, in other words, they are placed on top of each other with the joint surfaces 13a, 13b, 14a, 15a facing each other. First, one plate, i.e. the first surface plate 14 is disposed on the mould base 23, then the core plate 13 with the first joint surfaces 13a, 14a facing each other, and finally the third plate, i.e. the second surface plate 15 and the core plate 13 with the second joint surfaces 13b, 15a facing each other. Whenever necessary, suitable support means 24 are used for supporting plates 13, 14, 15 opposite one another and on the mould base 23. The seals 20, 21 seal the interstices between the plates 13, 14, 15 almost hermetically and the opening 22 can be connected to a suction pump or the like. A vacuum is conducted through the opening 22 via the grooves 16, 17 in the core plate 13 to the inner surface of the surface plates 14, 15 in step 95, the ambient atmospheric pressure pressing the surface plates 14, 15 into contact with the core plate 13. In this case as well, the pressing force required for the glueing is generated by the atmospheric pressure prevailing outside the plates. The glue is then allowed to dry in step 96. The bonding of the surface plates 14, 15 and the core plate 13 stiffens the prefabricated member to the desired shape, and any additional upper supports 24 which may have been used can now be removed. After the drying reaction of the glue on the surface plates 14, 15 the vacuum is released through the opening 22 in step 97, and after this the prefabricated member is finished in principle. The prefabricated member is checked and trimmed by filling up the opening 22 among other things. Thus, e.g. a pretensioned prefabricated member is manufactured, which may be used for instance to carry a specific load while maintaining its predetermined shape which differs from the pretensioned shape.

Moulded prefabricated members can also be manufactured by using a premoulded core plate. The glued surface plates are then placed on either side of the premoulded core plate equipped with seals. The core plate used may have deflections in many directions. After this, the steps 95-98 explained above are performed.

The invention has been described above by means of a number of preferred embodiments, yet the invention can of course be implemented in many ways within the scope of the inventive idea as defined in the accompanying claims.

## Claims

1. A prefabricated member comprising at least two plates (1, 2; 6; 13, 14, 15), a first plate, i.e. core plate (1; 13) and a second plate, i.e. surface plate (2; 6; 14, 15), the first and second plates having been mutually bonded by their joint surfaces (1a, 2a; 1b, 6a; 13a, 14a; 13b, 15a) equipped with a glue film (11, 12), the first plate (1; 13) having on its joint surface (1a; 1b; 13a, 13b) at least one set of interconnected grooves (3, 3a, 3b; 7, 7a, 7b; 16, 17) forming a fluted area (4; 8), the first plate (1; 13) comprising, at least at the stage of manufacturing the prefabricated member, an opening (5) for creating a vacuum, which opening communicates at one end with the grooves (3, 3a, 3b; 7, 7a, 7b; 16, 17) and at the other end with the outside of the plate (1; 13), **characterised in that** a seal (10; 10a, 10b; 20) having bond surfaces is provided around the fluted area (4; 8) formed by the grooves (3, 3a, 3b; 7, 7a, 7b; 16, 17) between the joint surfaces (1a, 2a; 1b, 6a; 13a, 14a; 13b, 15a) of the plates, the seal being provided for prefixing the joint surfaces of the plates to one another in order to provide an at least partly hermetic barrier around the fluted area at the stage of manufacturing the prefabricated member.

2. A prefabricated member as claimed in claim 1, **characterised in that** the seal (10; 10a, 10b; 20) has been disposed in the border area (9; 9a, 9b; 18, 19) of the joint surfaces (1a, 2a; 1b, 6a; 13a, 14a; 13b, 15a) of the plates (1, 2; 6; 13, 14, 15).

3. A prefabricated member as claimed in claim 1 or 2, **characterised in that** the seal (10; 10a, 10b; 20) is a sealing tape or a glue film.

4. A prefabricated member as claimed in claim 1, 2 or 3, **characterised in that** the seal (10; 10a, 10b; 20) has a width at least in the range from 10 to 30 mm.

5. A prefabricated member as claimed in any of the preceding claims 1 to 4, **characterised in that** the first plate, i.e. the core plate (1) is a cellular plastic board and that the second plate, i.e. the surface plate (2; 6; 14, 15) is one of the following: a veneer plate, a wooden panel or a metal sheet.

6. A method for producing prefabricated members comprising at least two plates (1, 2; 6; 13, 14, 15), a first plate, i.e. core plate (1; 13) and a second plate, i.e. surface plate (2; 6; 14, 15), the first and second plates being mutually bonded by their joint surfaces (1a, 2a; 1b, 6a; 13a, 14a; 13b, 15a), the first plate (1; 13) being equipped on its joint surface (1a; 1b; 13a, 13b) with at least one set of interconnected grooves (3, 3a, 3b; 7, 7a, 7b; 16, 17), forming a fluted area (4; 8), the first plate (1; 13) comprising, at least at the stage of manufacturing the prefabricated member, an opening (5), which communicates at one end with the grooves (3, 3a, 3b; 7, 7a, 7b; 16, 17) and at the other end with the outside of the plate (1; 13), whereby
- a glue film (11, 12) is provided at least on one of the joint surfaces (1a, 2a; 1b, 6a; 13a, 14a; 13b, 15a) of the plates,
- the plates (1, 2; 6; 13, 14, 15) are placed with their joint surfaces (1a, 2a; 1b, 6a; 13a, 14a; 13b, 15a) facing each other, after which
- a vacuum is created in the grooves (3, 3a, 3b; 7, 7a, 7b; 16, 17) through the opening (5) and between the plates (1, 2; 6; 13, 14, 15), the ambient atmospheric pressure pressing the joint surfaces (1a, 2a; 1b, 6a; 13a, 14a; 13b, 15a) against each other, the plates being mutually bonded owing to the glue film (11, 12), after which
- the vacuum is released and the prefabricated member is finished, **characterised in that**,
- a seal (10; 10a, 10b; 20) provided with bond surfaces is disposed around the fluted area (4; 8) formed by the grooves (3, 3a, 3b; 7, 7a, 7b; 16, 17) between the joint surfaces (1a, 2a; 1b, 6a; 13a, 14a; 13b, 15a) of the plates, the seal serving to prefix the joint surfaces of the plates (1, 2; 6; 13, 14, 15) to one another in order to provide an at least partly hermetic barrier of the joint surfaces (1a, 2a; 1b, 6a; 13a, 14a; 13b, 15a) around the fluted area at the stage of creating and using the vacuum.

7. A method as claimed in claim 6 for producing a prefabricated member, **characterised in that** the seal (10; 10a, 10b; 20) is provided on at least one of the joint surfaces (1a, 2a; 1b, 6a; 13a, 14a; 13b, 15a) of the plates.

8. A method as claimed in claim 6 or 7 for producing a prefabricated member, **characterised in that** the seal (10; 10a, 10b; 20) is disposed in the border area (9; 9a, 9b; 18, 19) of the joint surfaces (1a, 2a; 1b, 6a; 13a, 14a; 13b, 15a) of the plates (1, 2; 6; 13, 14, 15).

9. A method as claimed in claim 6, 7 or 8 for producing a prefabricated member, **characterised in that** the seal (10; 10a, 10b; 20) is disposed at least over a width of 10 to 30 mm.

10. A method for producing a prefabricated member as claimed in any of the preceding claims 6 to 9, **characterised in that** the plates (13, 14, 15) are disposed relative to one another and in the desired shape before the actual glueing is performed.

## Patentansprüche

1. Fertigteil, umfassend mindestens zwei Platten (1, 2; 6; 13, 14, 15), eine erste Platte, d.h. eine Kernplatte (1; 13), und eine zweite Platte, d.h. eine Oberflächenplatte (2; 6; 14, 15), wobei die erste und zweite Platte an deren gemeinsamen Oberflächen (1a, 2a; 1b, 6a; 13a, 14a; 13b, 15a), die mit einem Klebefilm (11, 12) versehen sind, miteinander verbunden sind, wobei die erste Platte (1; 13) auf ihrer gemeinsamen Oberfläche (1a; 1b; 13a, 13b) mindestens eine Gruppe miteinander verbundener Rillen (3, 3a, 3b; 7, 7a, 7b; 16, 17) aufweist, wodurch ein gerippter Bereich (4; 8) gebildet wird, wobei die erste Platte (1; 13) zumindest während der Herstellungsphase des Fertigteils eine Öffnung (5) zum Erzeugen eines Vakuums umfasst, die an der einen Seite mit den Rillen (3, 3a, 3b; 7, 7a, 7b; 16, 17) und an der anderen Seite mit der Außenseite der Platte (1; 13) verbunden ist, **dadurch gekennzeichnet, dass** eine Versiegelung (10; 10a, 10b; 20) mit Verbindungsoberflächen um den gerippten Bereich (4; 8) angeordnet ist, welcher durch die Rillen (3, 3a, 3b; 7, 7a, 7b; 16, 17) zwischen den gemeinsamen Oberflächen (1a, 2a; 1b, 6a; 13a, 14a; 13b, 15a) der Platten gebildet wird, wobei die Versiegelung zur Vorbefestigung der gemeinsamen Oberflächen der Platten aneinander dient, um in der Herstellungsphase des Fertigteils eine zumindest teilweise hermetische Begrenzung um den gerippten Bereich zu erhalten.

2. Fertigteil nach Anspruch 1, **dadurch gekennzeichnet, dass** die Versiegelung (10; 10a, 10b; 20) im Randbereich (9; 9a, 9b; 18, 19) der gemeinsamen Oberflächen (1a, 2a; 1b, 6a; 13a, 14a; 13b, 15a) der Platten (1, 2; 6; 13, 14, 15) angeordnet wurde.

3. Fertigteil nach Anspruch 1 oder 2, **dadurch gekennzeichnet, dass** die Versiegelung (1; 10a, 10b; 20) ein Siegelband oder Klebefilm ist.

4. Fertigteil nach Anspruch 1, 2 oder 3, **dadurch gekennzeichnet, dass** die Versiegelung (10; 10a, 10b; 20) mindestens 10 bis 30 mm breit ist.

5. Fertigteil nach einem der vorangehenden Ansprüche 1 bis 4, **dadurch gekennzeichnet, dass** die erste Platte, d.h. die Kernplatte (1), eine dicke Kunststoffschaumplatte ist und die zweite Platte, d.h. die Oberflächenplatte (2; 6; 14, 15), eins der folgenden ist: eine Furnierplatte, eine dicke Holzplatte oder eine dünne Metallplatte.

6. Verfahren zur Herstellung von Fertigteilen, die mindestens zwei Platten (1, 2; 6; 13, 14, 15), eine erste Platte, d.h. eine Kernplatte (1; 13) und eine zweite Platte, d.h. eine Oberflächenplatte (2; 6; 14, 15), umfassen, wobei die erste und zweite Platte an deren gemeinsamen Oberflächen (1a, 2a; 1b, 6a; 13a, 14a; 13b, 15a) miteinander verbunden sind, wobei die erste Platte (1; 13) auf ihrer gemeinsamen Oberfläche (1a; 1b; 13a, 13b) mindestens eine Gruppe miteinander verbundener Rillen (3, 3a, 3b; 7, 7a, 7b; 16, 17) aufweist, wodurch ein gerippter Bereich (4;8) entsteht, wobei die erste Platte (1; 13) zumindest in der Herstellungsphase des Fertigteils eine Öffnung (5) umfasst, die an der einen Seite mit den Rillen (3, 3a, 3b; 7, 7a, 7b; 16, 17) und an der anderen Seite mit der Außenseite der Platte (1; 13) verbunden ist; wobei
- ein Klebefilm (11, 12) auf mindestens eine der gemeinsamen Oberflächen (1a, 2a; 1b, 6a; 13a, 14a; 13b, 15a) der Platten aufgebracht ist;
- die Platten (1, 2; 6; 13, 14, 15) so plaziert werden, dass sich deren gemeinsame Oberflächen (1a, 2a; 1b, 6a; 13a, 14a; 13b, 15a) gegenüberliegen, wobei anschließend
- durch die Öffnung (5) ein Vakuum in den Rillen (3, 3a, 3b; 7, 7a, 7b; 16, 17) und zwischen den Platten (1, 2; 6; 13, 14, 15) erzeugt wird, wobei der umgebende atmosphärische Druck die gemeinsamen Oberflächen (1a, 2a; 1b, 6a; 13a, 14a; 13b, 15a) gegeneinander drückt, so dass die Platten aufgrund des Klebefilms (11, 12) miteinander verbunden werden, wobei anschließend
- das Vakuum beendet und das Fertigteil fertiggestellt wird, **dadurch gekennzeichnet, dass**
- eine mit Verbindungsoberflächen versehene Versiegelung (10; 10a, 10b; 20) um den gerippten Bereich (4; 8), der durch die Rillen (3, 3a, 3b; 7, 7a, 7b; 16, 17) zwischen den gemeinsamen Oberflächen (1a, 2a; 1b, 6a; 13a, 14a; 13b, 15a) der Platten gebildet wird, angeordnet wird, wobei die Versiegelung zur Vorbefestigung der gemeinsamen Oberflächen der Platten (1, 2; 6; 13, 14, 15) aneinander dient, um zum Zeitpunkt der Erzeugung und der Verwendung des Vakuums eine zumindest teilweise hermetische Begrenzung der gemeinsamen Oberflächen (1a, 2a; 1b, 6a; 13a, 14a; 13b, 15a) um den gerippten Bericht zu erhalten.

7. Verfahren nach Anspruch 6 zur Herstellung eines Fertigteils, **dadurch gekennzeichnet, dass** die versiegelung (10; 10a, 10b; 20) sich auf mindestens einer der gemeinsamen Oberflächen (1a, 2a; 1b, 6a; 13a, 14a; 13b, 15a) der Platten befindet.

8. Verfahren nach einem der Ansprüche 6 oder 7 zur Herstellung eines Fertigteils, **dadurch gekennzeichnet, dass** die Versiegelung (10; 10a, 10b; 20) im Randbereich (9; 9a, 9b; 18, 19) der gemeinsamen Oberflächen (1a, 2a; 1b, 6a; 13a, 14a; 13b, 15a) der Platten (1, 2; 6; 13, 14, 15) angeordnet ist.

9. Verfahren nach einem der Ansprüche 6, 7 oder 8 zur Herstellung eines Fertigteils, **dadurch gekennzeichnet, dass** die Versiegelung (10; 10a, 10b; 20) mindestens über eine Breite von 10 bis 30 mm angeordnet ist.

10. Verfahren zur Herstellung eines Fertigteils nach einem der vorangehenden Ansprüche 6 bis 9, **dadurch gekennzeichnet, dass** die Platten (13, 14, 15) im Verhältnis zueinander und in der gewünschten Form angeordnet werden, bevor die tatsächliche Verklebung durchgeführt wird.

## Revendications

1. Elément préfabriqué comprenant au moins deux plaques (1, 2 ; 6, 13, 14, 15), une première plaque, c'est-à-dire une plaque porte-poinçon (1 ; 13) et une seconde plaque, c'est-à-dire un marbre (2 ; 6, 14, 15), les première et seconde plaques ayant été collées mutuellement par leurs surfaces de joint (1a, 2a ; 1b, 6a ; 13a, 14a ; 13b, 15a) équipées d'un film de colle (11, 12), (la première plaque (1 ; 13) présentant sur sa surface de joint (1a; 1b ; 13a ; 13b) au moins un ensemble de rainures interconnectées (3, 3a, 3b ; 7, 7a, 7b ; 16, 17), la première plaque (1 ; 13) comprenant, au moins au niveau de l'étape de fabrication de l'élément préfabriqué, une ouverture (5) destinée à créer un vide, laquelle ouverture communique à une extrémité avec les rainures (3, 3a, 3b ; 7, 7a, 7b ; 16, 17) et à l'autre extrémité avec l'extérieur de la plaque (1 ; 13), **caractérisé en ce que** un joint (10 ; 10a, 10b ; 20) présentant des surfaces de liaison est fourni autour de la zone cannelée (4 ; 8) formée par les rainures (3, 3a, 3b ; 7, 7a, 7b ; 16, 17) entre les surfaces de joint (1a, 2a ; 1b, 6a ; 13a, 14a ; 13b, 15a) des plaques, le joint étant fourni pour pré-fixer les surfaces de joint des plaques les unes aux autres afin de fournir une protection au moins partiellement hermétique autour de la zone cannelée au niveau de l'étape de fabrication de l'élément préfabriqué.

2. Elément préfabriqué selon la revendication 1, **caractérisé en ce que** le joint (10 ; 10a, 10b ; 20) a été disposé dans la zone limitrophe (9 ; 9a, 9b ; 18, 19) des surfaces de joint (1a, 2a ; 1b, 6a ; 13a, 14a ; 13b, 15a) des plaques (1, 2 ; 6 ; 13, 14, 15).

3. Elément préfabriqué selon la revendication 1 ou 2, **caractérisé en ce que** le joint (10 ; 10a, 10b ; 20) est un ruban d'étanchéité ou un film de colle.

4. Elément préfabriqué selon la revendication 1, 2 ou 3, **caractérisé en ce que** le joint (10 ; 10a, 10b ; 20) présente une largeur au moins dans la gamme entre 10 et 30 mm.

5. Elément préfabriqué selon l'une quelconque des revendications 1 à 4 qui précèdent, **caractérisé en ce que** la première plaque, c'est-à-dire la plaque porte-poinçon (1) est une planche en plastique cellulaire et **en ce que** la seconde plaque, c'est-à-dire le marbre (2 ; 6 ; 14, 15) est l'une des suivantes : une plaque en plaquage, un panneau en bois ou une feuille de métal.

6. Procédé de production d'éléments préfabriqués comprenant au moins deux plaques (1, 2 ; 6 ; 13, 14, 15), une première plaque, c'est-à-dire une plaque porte-poinçon 1 ; 13) et une seconde plaque, c'est-à-dire un marbre (2 ; 6 ; 14, 15), la première et la seconde plaques étant collées mutuellement par leurs surfaces de joint (1a ; 2a ; 1b ; 6a ; 13a, 14a ; 13b, 15a), la première plaque (1 ; 13) étant équipée sur sa surface de joint (1a ; 1b ; 13a, 13b) d'au moins un ensemble de rainures interconnectées (3, 3a, 3b ; 7, 7a, 7b ; 16, 17), formant une zone cannelée (4 ; 8), la première plaque (1 ; 13) comprenant, au moins au niveau de l'étape de fabrication de l'élément préfabriqué, une ouverture (5) qui communique à une extrémité avec les rainures (3, 3a, 3b ; 7, 7a, 7b ; 16, 17) et à l'autre extrémité avec l'extérieur de la plaque (1 ; 13), moyennant quoi,
un film de colle (11, 12) est fourni au moins sur une des surfaces de joint (1a, 2a ; 1b, 6a ; 13a, 14a ; 13b, 15a) des plaques
les plaques (1, 2 ; 6 ; 13, 14, 15) sont placées avec leurs surfaces de joint (1a, 2a ; 1b, 6a ; 13a, 14a ; 13b, 15a) se faisant face les unes les autres, après quoi
un vide est créé dans les rainures (3, 3a, 3b ; 7, 7a, 7b ; 16, 17) à travers l'ouverture (5) et entre les plaques (1, 2 ; 6 ; 13, 14, 15), la pression atmosphérique ambiante pressant les surfaces de joint (1a, 2a ; 1b, 6a ; 13a, 14a ; 13b, 15a) les unes contre les autres, les plaques étant collées mutuellement en raison du film de colle (11, 12), après quoi
le vide est libéré et l'élément préfabriqué est fini, **caractérisé en ce que**,
un joint (10 ; 10a, 10b ; 20) muni de surfaces de liaison est disposé autour de la zone cannelée (4 ; 8) formée par les rainures (3, 3a, 3b ; 7, 7a, 7b ; 16, 17) entre les surfaces de joint (1a, 2a ; 1b, 6a ; 13a, 14a ; 13b, 15a) des plaques, le joint servant à pré-fixer les surfaces de joint des plaques (1, 2 ; 6 ; 13, 14, 15) les unes aux autres afin de fournir une protection au moins partiellement hermétique des surfaces de joint (1a, 2a ; 1b, 6a ; 13a, 14a ; 13b, 15a) autour de la zone cannelée au niveau de l'étape de création et d'utilisation du vide.

7. Procédé selon la revendication 6 de production d'un élément préfabriqué, **caractérisé en ce que** le joint (10 ; 10a, 10b ; 20) est fourni sur au moins une des surfaces de joint (1a, 2a ; 1b, 6a ; 13a, 14a ; 13b, 15a) des plaques.

8. Procédé selon la revendication 6 ou 7 de production d'un élément préfabriqué, **caractérisé en ce que** le joint (10 ; 10a, 10b ; 20) est disposé dans la zone limitrophe (9 ; 9a, 9b ; 18, 19) des surfaces de joint (1a, 2a ; 1b, 6a ; 13a, 14a ; 13b, 15a) des plaques (1, 2 ; 6 ; 13, 14, 15).

9. Procédé selon la revendication 6, 7 ou 8 de production d'un élément préfabriqué, **caractérisé en ce que** le joint (10 ; 10a, 10b ; 20) est disposé au moins sur une largeur de 10 à 30 mm.

10. Procédé de production d'un élément préfabriqué selon l'une quelconque des revendications 6 à 9 qui précèdent, **caractérisé en ce que** les plaques (13, 14, 15) sont disposées les unes par rapport aux autres et dans la forme souhaitée avant que le collage réel ne soit exécuté.
